# FASCICULE DE BREVET EUROPEEN

(11) **EP 1 705 361 B1**
(45) Date de publication et mention de la délivrance du brevet: **04.05.2016**
(21) Numéro de dépôt: 06290453.7
(22) Date de dépôt: 21.03.2006
(51) Int. Cl.: F02K 1/28, F02K 1/00

(54) **Tuyère avec système de déviation d'un flux de gaz**
Düse mit Ablenksystem einer Gasströmung
Nozzle comprising a system for the deviation of a gas flow

(30) Priorité: 23.03.2005 FR 0502879
(43) Date de publication de la demande: 27.09.2006
(73) Titulaire: SNECMA, 75015 Paris (FR)
(72) Inventeur: Beutin, Bruno, 91000 Evry (FR); Fert, Jérémy, 75012 Paris (FR)
(74) Mandataire: Ramey, Daniel

(56) Documents cités:
- FR-A- 1 075 067
- FR-A- 1 362 403
- FR-E- 62 595
- US-B1- 6 679 048

## Description

La présente invention concerne une tuyère d'éjection d'un engin volant, tel en particulier qu'un drone, comprenant un système de déviation d'un flux de gaz.

Le montage d'un système de déviation du flux de gaz s'écoulant dans une telle tuyère d'éjection permet de supprimer la gouverne de cet engin volant qui lorsqu'elle est actionnée émet un signal électromagnétique repérable par radar.

Un système de déviation classique comprend des moyens d'injection de gaz sous pression dans une direction donnée dans le flux de gaz s'écoulant dans la tuyère et des moyens de commande du débit de gaz sortant des moyens d'injection, la commande du virage en lacet de l'engin volant étant réalisée par déviation du flux de gaz vers la gauche ou vers la droite dans des directions sensiblement symétriques par rapport à l'axe longitudinal de la tuyère.

L'invention a notamment pour but d'améliorer les performances en vol et la précision de pilotage de ce type d'engin volant.

Elle propose à cet effet une tuyère d'éjection d'un engin volant pourvue d'un système de déviation d'un flux de gaz, ledit système de déviation comprenant des moyens d'injection de gaz sous pression dans une direction donnée dans le flux de gaz s'écoulant dans la tuyère et des moyens de commande du débit de gaz sortant des moyens d'injection, les moyens d'injection de gaz comprenant :
- des boîtiers structuraux fixes qui s'étendent à l'intérieur de la tuyère perpendiculairement au flux de gaz s'écoulant dans la tuyère et qui sont alimentés en gaz de déviation par une de leurs extrémités extérieure à la tuyère, ces boîtiers comportant dans leurs parois latérales des fentes d'injection de gaz orientées dans des directions données par rapport à la direction d'écoulement du flux de gaz dans la tuyère,
- et des moyens commandés d'obturation réglable de ces fentes d'injection, ces moyens commandés d'obturation comprenant des volets montés à l'intérieur desdits boîtiers et guidés en déplacement le long des fentes d'injection, ces volets étant reliés à des moyens d'actionnement situés à l'extérieur des boîtiers et de la tuyère.

L'obturation réglable des fentes latérales des boîtiers structuraux permet de commander la déviation dans une direction ou dans l'autre, et de régler le débit de gaz sortant de ces fentes latérales.

Dans l'art antérieur, FR62595E présentait une solution comparable à celle du préambule de la revendication 1, et US6679048 une solution illustrative des développements existant par ailleurs dans le domaine.

Les volets sont avantageusement déplaçables entre une position d'obturation des fentes d'injection et deux positions extrêmes d'ouverture de fentes orientées dans une direction donnée et d'obturation de fentes orientées dans l'autre direction, et inversement.

Les moyens d'actionnement des volets des différents boîtiers sont avantageusement reliés à un moyen commun de commande, tel qu'un vérin par exemple.

Dans un premier mode de réalisation de l'invention, les volets sont montés rotatifs à l'intérieur des boîtiers et comprennent chacun une tige axiale d'entraînement en rotation qui s'étend à l'extérieur du boîtier.

Le moyen commun de commande précité peut alors comprendre une crémaillère s'étendant le long des boîtiers à l'extérieur de la tuyère et venant en prise avec des pignons portés par les extrémités des tiges précitées sur lesquelles sont montés les volets.

Dans un second mode de réalisation de l'invention, les volets sont montés coulissants à l'intérieur des boîtiers, le ou les volets de chaque boîtier étant reliés, par une tige s'étendant à l'extérieur du boîtier et de la tuyère, à une barre transversale qui s'étend le long des boîtiers à l'extérieur de la tuyère, et qui est actionnée par le moyen commun de commande précité.

Les boîtiers structuraux sont de préférence situés au col de sortie de la tuyère pour améliorer l'efficacité de la déviation en lacet, et sont au moins au nombre de trois et avantageusement au nombre de quatre, deux boîtiers latéraux étant agencés aux extrémités d'une section transversale de la tuyère, et un troisième boîtier étant au milieu de la tuyère ou deux autres boîtiers étant situés dans cette section transversale à égale distance l'un de l'autre et des boîtiers latéraux.

Les boîtiers sont alimentés en gaz de déviation par prélèvement de gaz sous pression dans une zone amont du moteur de l'engin volant, par exemple sur un compresseur du moteur.

L'invention sera mieux comprise et d'autres avantages et caractéristiques de l'invention apparaîtront à la lecture de la description suivante faite à titre d'exemple non limitatif en référence aux dessins annexés dans lesquels :
la figure 1 est une vue schématique partielle en perspective d'une tuyère d'éjection d'un engin volant équipée d'un système de déviation selon l'invention ;
la figure 2 est une vue schématique en perspective avec arrachement partiel d'un boîtier structural du système de déviation de la figure 1 ;
la figure 3 est une vue schématique en perspective de la tuyère d'éjection équipée d'une variante de réalisation du système de déviation selon l'invention ;
la figure 4 est une vue schématique en perspective avec arrachement partiel d'un boîtier structural du système de déviation de la figure 3 ;
les figures 5 à 7 sont des vues schématiques en coupe transversale illustrant les différentes positions des volets par rapport aux fentes d'injection d'un boîtier dans le système de déviation de la figure 3.

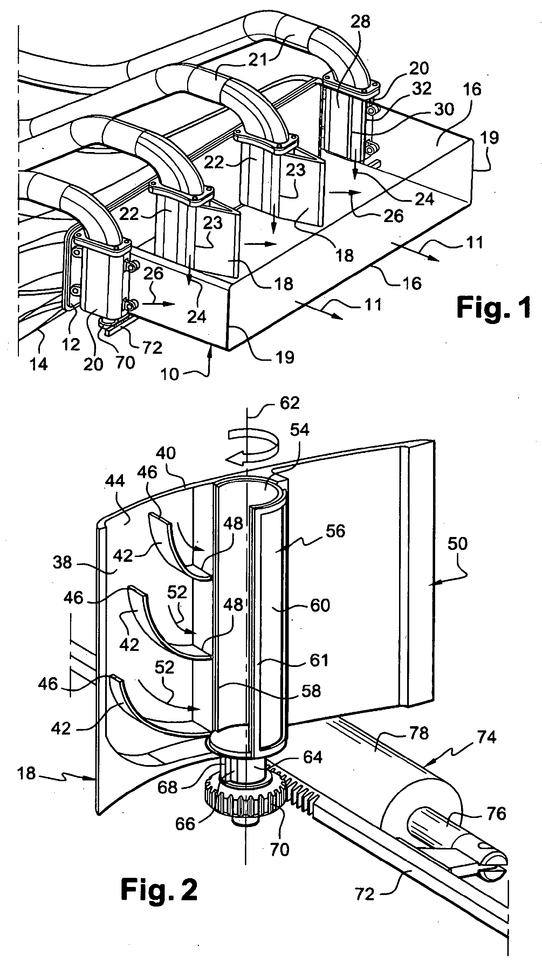

On se réfère d'abord à la figure 1 qui représente schématiquement en perspective une tuyère 10 d'éjection d'un flux de gaz 11 d'un engin volant, en particulier d'un drone, l'extrémité amont 12 de la tuyère étant fixée par des moyens appropriés à l'extrémité aval d'une enveloppe externe 14 du moteur (non représenté) de l'engin volant.

La tuyère 10 a une forme rectangulaire en section transversale et comprend deux grandes parois 16 entre lesquelles s'étendent perpendiculairement deux boîtiers structuraux 18 fixés à leurs extrémités sur ces parois 16, et deux petites parois 19 reliant les extrémités des grandes parois 16 de la tuyère et sur chacune desquelles est fixé un boîtier structural 20.

Les parois 16 et 19 sont dans l'exemple représenté de forme simple, mais peuvent être en variante de forme plus complexe.

Les boîtiers structuraux 18, 20 permettent d'injecter du gaz sous pression dans des directions données dans le flux de gaz 11 s'écoulant dans la tuyère afin de dévier la poussée de l'engin volant en lacet.

Ces boîtiers sont situés au col de sortie de la tuyère, sensiblement à égale distance les uns des autres, et sont reliés par une de leurs extrémités à des conduits 21 d'alimentation en gaz de déviation qui s'étendent le long de l'enveloppe externe 14 du moteur jusqu'à une prise d'air située dans le moteur pour le prélèvement de gaz sous pression.

Les boîtiers structuraux 18 ont en section transversale une forme profilée et comprennent sur chacune de leurs parois latérales 22 au moins une fente 23 formée sur une partie médiane de cette forme profilée et s'étendant sur une majeure partie de la hauteur des boîtiers 18.

Les fentes 23 des faces latérales 22 visibles en figure 1 sont destinées à injecter du gaz sous pression dans une direction 24 dans le flux de gaz 11 s'écoulant dans la tuyère, et les fentes 23 des faces latérales 22 non visibles en figure 1 sont destinées à injecter du gaz sous pression dans une direction 26 dans le flux de gaz 11 s'écoulant dans la tuyère, les directions 24 et 26 étant sensiblement symétriques par rapport à l'axe longitudinal de la tuyère 10.

Les boîtiers structuraux 20 aux extrémités latérales de la tuyère sont à l'extérieur de la tuyère et ont une forme sensiblement parallélépipédique. Ils comprennent sur leurs parois 28 appliquées contre les parois latérales 19 de la tuyère des fentes 30 formées sur des parties d'extrémités aval de ces parois 28, qui s'étendent sur une majeure partie de la hauteur des boîtiers 20, et qui sont alignées avec des fentes 32 formées dans les parois latérales 19 de la tuyère.

La fente 30 qui est visible en figure 1 est destinée à injecter du gaz sous pression dans la direction 24 précitée dans le flux de gaz 11 s'écoulant dans la tuyère, et la fente 30 de l'autre boîtier 20, non visible en figure 1 est destinée à injecter du gaz sous pression dans la direction 26 précitée dans le flux de gaz 11 s'écoulant dans la tuyère.

La figure 2 est une vue schématique en perspective d'une moitié d'un boîtier structural 18 de la figure 1, qui comprend une chambre amont 38 de réception des gaz prélevés sur le compresseur et amenés par un conduit 21 à l'extrémité 40 du boîtier, cette chambre comportant des ailettes internes 42 de redressement du flux de gaz, s'étendant chacune de manière incurvée entre les faces latérales internes 44 de cette chambre, et ayant une extrémité 46 dirigée vers l'extrémité d'alimentation 40 du boîtier et une extrémité 48 orientée vers le bord aval 50 du boîtier, sensiblement parallèlement à l'axe de la tuyère.

Le flux de gaz circulant dans le boîtier, schématiquement représenté par les flèches 52, est orienté vers un canal cylindrique 54 s'étendant axialement sur la majeure partie de la hauteur du boîtier en aval de la chambre 38, et dans la paroi cylindrique duquel sont formées les fentes 23 précitées (non visibles) d'injection de gaz sous pression dans le flux de gaz s'écoulant dans la tuyère.

Un volet cylindrique tubulaire 56 est monté rotatif dans le canal 54 du boîtier et comprend en amont une ouverture longitudinale 58 d'entrée de gaz depuis la chambre 38 et une paroi cylindrique 60 sur laquelle est formée au moins une fente destinée à coïncider avec une fente 23 du boîtier.

Les boîtiers 18 comprennent également des joints d'étanchéité 61 de forme rectangulaire qui sont montés à la périphérie des fentes 23 entre le volet 56 et le canal cylindrique 54 comportant les fentes d'injection.

Le volet 56 est entraîné en rotation autour de son axe 62 au moyen d'une tige axiale 64 qui est fixée à l'extrémité du volet, du côté opposé à l'extrémité d'alimentation 40 du boîtier, et qui s'étend à l'extérieur du boîtier 18 et de la tuyère, cette tige axiale 64 étant centrée et guidée en rotation par une douille cylindrique 66 montée autour de la tige 64 dans une cheminée cylindrique 68 du boîtier.

La tige axiale 64 porte un pignon 70 qui est en prise avec une crémaillère 72 s'étendant transversalement le long des boîtiers 18, 20 à l'extérieur de la tuyère 10, comme représenté en figure 1.

Chaque boîtier latéral 20 comprend également une chambre 38 et un canal 54 dans lequel est monté en rotation un volet 56 relié à une extrémité à une tige axiale 64 portant un pignon 70 en prise sur cette crémaillère 72.

La crémaillère est reliée à un moyen commun de commande qui est ici un vérin 74 dont le piston 76 est relié à la crémaillère 72 et dont le cylindre 78 est monté sur la tuyère 10.

L'actionnement du vérin 74 entraîne les volets 56 en rotation autour de leurs axes 62, ces volets étant déplaçables entre une position médiane d'obturation des fentes d'injection 23, 30, et deux positions extrêmes d'ouverture des fentes 23, 30 orientées dans la direction 24 et d'obturation des fentes 23, 30 orientées dans la direction 26, et inversement.

La rotation des volets 56 permet également de réguler le débit de gaz injecté dans la tuyère par variation du degré d'obturation des fentes 23.

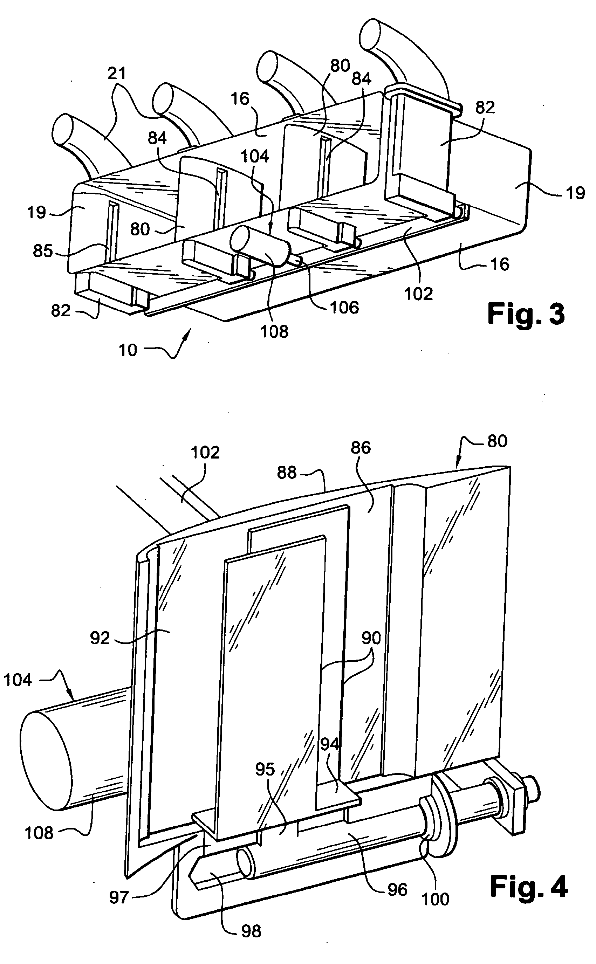

Les figures 3 à 7 représentent une variante de réalisation du système de déviation selon l'invention.

Ce système de déviation comprend, comme dans le mode de réalisation précédent, deux boîtiers structuraux 80 s'étendant verticalement à l'intérieur de la tuyère 10 perpendiculairement au flux de gaz et deux boîtiers structuraux latéraux 82 montés sur les parois latérales 19 de la tuyère 10, à l'extérieur de celle-ci.

Les boîtiers 80 comprennent une fente 84 sur chacune de leurs parois latérales et les boîtiers 82 comprennent chacun une fente (non visible) formée sur leur paroi en contact avec une paroi latérale 19 de la tuyère 10 et alignée avec une fente correspondante 85 de cette paroi latérale 19.

Chaque boîtier structural 80 comprend (Figure 4) une chambre interne 86 reliée à l'extrémité 88 d'alimentation en gaz du boîtier et à l'intérieur de laquelle sont montés deux volets rectangulaires plats 90 déplaçables en coulissement dans des plans verticaux parallèles à la direction d'écoulement du flux de gaz dans la tuyère, et s'appliquant chacun sur une face latérale interne 92 de la chambre 86.

Les deux volets 90 sont fixés à l'une de leurs extrémités, en étant décalés dans leur direction de déplacement, sur une plaque horizontale rectangulaire 94 qui est reliée par l'intermédiaire d'une patte verticale 95 à une tige cylindrique horizontale 96 qui s'étend en aval à l'extérieur du boîtier 80 et de la tuyère 10 dans une direction parallèle au flux de gaz.

La patte verticale 95 est déplaçable en translation dans un passage longitudinal 97 reliant la chambre 86 à un logement cylindrique 98 dans lequel est guidée en coulissement la tige horizontale 96 qui, par sa partie d'extrémité aval, traverse une paroi aval du boîtier de façon étanche grâce au montage d'un joint annulaire 100 dans l'orifice de la paroi du boîtier.

Chaque boîtier latéral 82 comprend également une chambre interne 86 et un volet 90 d'obturation de la fente du boîtier et de régulation du débit de gaz sortant par cette fente.

Les tiges 96 des boîtiers structuraux 80, 82 sont fixées par leurs extrémités aval à une barre transversale 102 qui s'étend le long des boîtiers à l'extérieur de la tuyère 10 et qui est reliée à un moyen commun de commande qui est dans l'exemple représenté un vérin 104 dont le piston 106 est relié à la barre 102 et dont le cylindre 108 est monté sur la tuyère 10.

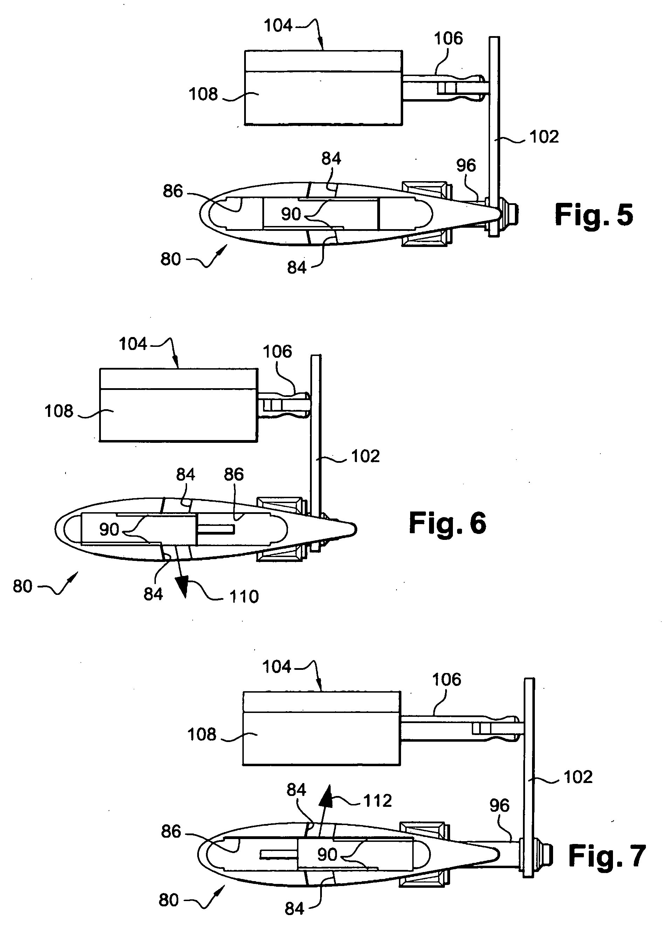

Les différentes positions des volets 90 dans la chambre interne 86 d'un boîtier structural 80 sont représentées dans les figures 5 à 7.

La figure 5 représente une position médiane d'obturation des deux fentes d'injection 84 d'un boîtier 80, dans laquelle les volets 90 obturent totalement ces fentes et empêchent l'injection de gaz de déviation dans la tuyère.

En figure 6, le piston 106 du vérin a été déplacé vers l'amont, la barre transversale 102 a entraîné en coulissement les volets 90 à l'intérieur de la chambre jusqu'à une position où la fente 84 d'une première paroi latérale du boîtier est obturée par le volet 90 correspondant et la fente de l'autre paroi latérale est entièrement dégagée afin d'injecter du gaz sous pression à travers cette fente dans une direction 110 avec un débit de gaz maximum.

En figure 7, le piston 106 du vérin a été déplacé vers l'aval, la barre transversale 102 a entraîné en coulissement les volets 90 jusqu'à une position où la fente 84 de la première paroi précitée du boîtier est entièrement dégagée pour l'injection du gaz sous pression à travers cette fente dans une direction 112 avec un débit de gaz maximum, et la fente de l'autre paroi est obturée par le volet 90 correspondant.

Toutes les positions intermédiaires entre les positions extrêmes des figures 6 et 7 sont possibles pour l'injection de gaz dans la tuyère avec un débit déterminé.

En variante, les boîtiers structuraux 80, 82 peuvent comprendre deux fentes ou plus sur leurs parois latérales.

Les gaz de déviation peuvent être injectés dans la tuyère dans une direction perpendiculaire au flux de gaz 11 s'écoulant dans la tuyère, ou dans une direction oblique comme représenté en figures 6 et 7.

Les système de déviation selon l'invention peut comprendre un, deux ou trois boîtiers structuraux 18 ou 80, voire plus, qui s'étendent à l'intérieur de la tuyère perpendiculairement au flux de gaz s'écoulant dans la tuyère, ces boîtiers étant préférentiellement situés à égale distance les des autres et des parois latérales de la tuyère.

## Revendications

1. Tuyère d'éjection (10) d'un engin volant comprenant un système de déviation d'un flux de gaz (11) dans ladite tuyère d'éjection (10), ledit système de déviation comprenant :
- des moyens d'injection de gaz sous pression dans une direction donnée dans le flux de gaz (11) s'écoulant dans la tuyère (10), lesdits moyens d'injection de gaz comprenant des boîtiers structuraux fixes (18, 80) qui s'étendent à l'intérieur de la tuyère (10) perpendiculairement au flux de gaz (11) s'écoulant dans la tuyère (10) et qui sont alimentés en gaz de déviation par une de leurs extrémités extérieures à la tuyère (10), ces boîtiers (18, 80) comportant dans leurs parois latérales des fentes (23, 84) d'injection de gaz orientées dans des directions données (24, 26, 110, 112) par rapport à la direction d'écoulement du flux de gaz (11) dans la tuyère (10),
- et des moyens de commande du débit de gaz sortant des moyens d'injection, **caractérisée en ce que** les moyens d'injection de gaz comprennent en outre des moyens commandés d'obturation réglable desdites fentes d'injection (23, 84), ces moyens commandés d'obturation comprenant des volets (56, 90) montés à l'intérieur desdits boîtiers (18, 80) et guidés en déplacement le long desdites fentes (23, 84), ces volets (56, 90) étant reliés à des moyens d'actionnement situés à l'extérieur des boîtiers (18, 80) et de la tuyère (10).

2. Tuyère selon la revendication 1, **caractérisée en ce que** les volets (56, 90) sont déplaçables entre une position d'obturation des fentes d'injection (23, 84) et deux positions extrêmes d'ouverture de fentes (23, 84) orientées dans une direction donnée (24, 110) et d'obturation de fentes (23, 84) orientées dans une autre direction (26, 112), et inversement.

3. Tuyère selon la revendication 1 ou 2, **caractérisée en ce que** les moyens d'actionnement sont reliés à un moyen commun de commande, tel qu'un vérin (74, 104) par exemple.

4. Tuyère selon l'une des revendications 1 à 3, **caractérisée en ce que** les volets (56) sont montés rotatifs à l'intérieur des boîtiers (18) et comprennent chacun une tige axiale (64) d'entraînement en rotation qui s'étend à l'extérieur du boîtier (18).

5. Tuyère selon la revendication 4, **caractérisée en ce que** l'extrémité de la tige (64) extérieure au boîtier (18) porte un pignon (70) qui est en prise avec une crémaillère (72) s'étendant le long des boîtiers (18) à l'extérieur de la tuyère (10).

6. Tuyère selon la revendication 4 ou 5, **caractérisée en ce que** des joints d'étanchéité (61) sont montés entre les volets rotatifs (56) et les parois latérales (22) des boîtiers (18) comportant les fentes d'injection (23).

7. Tuyère selon l'une des revendications 1 à 3, **caractérisée en ce que** les volets (90) sont montés coulissants à l'intérieur des boîtiers (80), le ou les volets (90) de chaque boîtier (80) étant reliés à une tige (96) s'étendant à l'extérieur du boîtier (80) et de la tuyère (10) et fixée à une barre transversale (102) qui s'étend le long des boîtiers (80) à l'extérieur de la tuyère (10).

8. Tuyère selon l'une des revendications précédentes, **caractérisée en ce que** les boîtiers structuraux (18, 80) sont situés au col de sortie de la tuyère (10).

9. Tuyère selon l'une des revendications précédentes, **caractérisée en ce que**, parmi les boîtiers structuraux fixes (18, 80), - elle comprend au moins un boîtier (18, 80) s'étendant au milieu de la tuyère (10) et deux boîtiers latéraux (20, 82) agencés aux extrémités d'une section transversale de la tuyère (10).

10. Tuyère selon l'une des revendications précédentes, **caractérisée en ce que**, parmi les boîtiers structuraux fixes (18, 80), elle comprend deux boîtiers latéraux (20, 82) agencés aux extrémités d'une section transversale de la tuyère (10) et deux boîtiers centraux (18, 80) situés à égale distance l'un de l'autre et des boîtiers latéraux (20, 82).

11. Tuyère selon l'une des revendications précédentes, **caractérisée en ce que** les boîtiers (18, 20, 80, 82) sont alimentés en gaz sous pression par prélèvement de gaz en amont sur le moteur de l'engin volant.

12. Tuyère selon l'une des revendications précédentes, **caractérisée en ce que** les boîtiers (18, 80) ont une forme profilée en section transversale et les fentes d'injection (23, 84) de gaz sous pression sont formées dans une partie médiane de cette forme profilée et s'étendent sur une majeure partie de la hauteur des boîtiers (18, 80).

13. Tuyère selon l'une des revendications précédentes, **caractérisée en ce que** les boîtiers (18, 20, 80, 82) comportent des ailettes internes (42) de redressement du flux de gaz s'étendant entre leur extrémité d'alimentation (40) et les fentes d'injection (23).

## Patentansprüche

1. Ausschießdüse (10) eines Fluggeräts, umfassend ein Ableitsystem eines Gasstroms (11) in der genannten Ausschießdüse (10), wobei das genannte Ableitsystem umfasst:
- Einschießmittel für unter Druck stehendes Gas in eine bestimmte Richtung in dem Gasstrom (11), der in der Düse strömt, wobei die genannten Einschießmittel des Gases feste strukturelle Gehäuse (18, 80) umfassen, die sich im Innern der Düse (10) lotrecht zum Gasstrom (11), der in der Düse (10) strömt, erstrecken und die durch eines ihrer äußeren Enden an der Düse (10) mit Ableitgas versorgt werden, wobei diese Gehäuse (18, 80) in ihren Seitenwänden Einschießschlitze (23, 84) des Gases umfassen, die in bestimmten Richtungen (24, 26, 110, 112) im Verhältnis zur Abströmrichtung des Gasstroms (11) in der Düse (10) ausgerichtet sind,
- und Steuermittel des Gasdurchsatzes, die aus Einschießmitteln austreten, **dadurch gekennzeichnet, dass** die Einschießmittel des Gases darüber hinaus gesteuerte Mittel mit einem verstellbaren Verschluss der genannten Einschießschlitze (23, 84) umfassen, wobei diese gesteuerten Verschlussmittel Klappen (56, 90) umfassen, die im Innern der genannten Gehäuse (18, 80) montiert und in Verschiebung entlang der genannten Schlitze (23, 84) geführt sind, wobei diese Klappen (56, 90) mit Betätigungsmitteln verbunden sind, die sich an der Außenseite der Gehäuse (18, 80) und der Düse (10) befinden.

2. Düse gemäß Anspruch 1, **dadurch gekennzeichnet, dass** die Klappen (56, 90) zwischen einer Verschlussposition der Einschießschlitze (23, 84) und zwei Öffnungspositionen der Schlitze (23, 84), die in einer bestimmten Richtung (24, 110) und Verschlussrichtung der Schlitze (23, 84), die in einer anderen Richtung (26, 112) ausgerichtet sind, und umgekehrt, ausgerichtet sind.

3. Düse gemäß Anspruch 1 oder 2, **dadurch gekennzeichnet, dass** die Betätigungsmittel an ein gemeinsames Steuermittel angeschlossen sind, wie z. B. einen Zylinder (74, 104).

4. Düse gemäß Anspruch 1 bis 3, **dadurch gekennzeichnet, dass** die Klappen (56) rotierend im Innern der Gehäuse (18) montiert sind und jeweils einen axialen Antriebsstift (64) n Rotation umfassen, der sich an der Außenseite des Gehäuses (18) erstreckt.

5. Düse gemäß Anspruch 4, **dadurch gekennzeichnet, dass** das Ende des äußeren Stiftes (64) am Gehäuse (18) einen Zapfen (70) trägt, der in eine Zahnstange (72) eingreift, die sich entlang den Gehäusen (18) an der Außenseite der Düse (10) erstreckt.

6. Düse gemäß Anspruch 4 oder 5, **dadurch gekennzeichnet, dass** Dichtungen (61) zwischen den rotierenden Klappen (56) und den Seitenwänden (22) der Gehäuse (18) montiert sind, die Einschießschlitze (23) umfassen.

7. Düse gemäß Anspruch 1 bis 3, **dadurch gekennzeichnet, dass** die Klappen (90) im Innern der Gehäuse (80) gleitend montiert sind, wobei die Klappe oder die Klappen (90) jedes Gehäuses (80) an einen Stift (96) angeschlossen sind, der sich an der Außenseite des Gehäuses (80) und der Düse (10) erstreckt und an einer Querstange (102) befestigt ist, die sich entlang der Gehäuse (80) an der Außenseite der Düse (10) erstreckt.

8. Düse gemäß einem der voranstehenden Ansprüche, **dadurch gekennzeichnet, dass** die strukturellen Gehäuse (18, 80) sich am Ausgangshals der Düse (10) befinden.

9. Düse gemäß einem der voranstehenden Ansprüche, **dadurch gekennzeichnet, dass** sie von den festen strukturellen Gehäusen (18, 80) wenigstens ein Gehäuse (18, 80) umfasst, das sich in der Mitte der Düse (10) erstreckt, und zwei laterale Gehäuse (20, 82), die an den Enden eines Querschnitts der Düse (10) erstreckt.

10. Düse gemäß einem der voranstehenden Ansprüche, **dadurch gekennzeichnet, dass** sie von den festen strukturellen Gehäusen (18, 80) zwei laterale Gehäuse (20, 82), die an den Enden eines Querschnitts der Düse (10) angeordnet sind, und zwei zentrale Gehäuse (18, 80), die sich in gleicher Entfernung voneinander befinden, und laterale Gehäuse (20, 82) umfasst.

11. Düse gemäß einem der voranstehenden Ansprüche, **dadurch gekennzeichnet, dass** die Gehäuse (18, 20, 80, 82) mit unter Druck stehendem Gas per Entnahme von Gasen vor dem Motor des Fluggeräts versorgt sind.

12. Düse gemäß einem der voranstehenden Ansprüche, **dadurch gekennzeichnet, dass** die Gehäuse (18, 80) eine im Querschnitt profilierte Form haben und die Einschießschlitze (23, 84) des unter Druck stehenden Gases in einem medianen Teil dieser profilierten Form gebildet sind und sich auf einem Hauptteil der Höhe der Gehäuse (18, 80) erstrecken.

13. Düse gemäß einem der voranstehenden Ansprüche, **dadurch gekennzeichnet, dass** die Gehäuse (18, 20, 80, 82) interne Flügel (42) zum Aufrichten des Gasstroms umfassen, der sich zwischen ihrem Versorgungsende (40) und den Einschießschlitzen (23) erstreckt.

## Claims

1. An exhaust nozzle (10) of a flying craft, comprising a deflection system for a gas stream (11), such deflection system comprising injection means for injecting pressurized gas in a given direction into the gas stream (11) flowing in the nozzle (10) and control means for controlling the gas flow leaving the injection means, wherein the gas injection means comprise fixed structural housings (18, 80) which extend inside the nozzle (10) perpendicularly to the gas stream (11) flowing in the nozzle (10) and which are fed with deflection gas through one of their ends external to the nozzle (10), these housings (18, 80) comprising in their side walls gas injection slits (23, 84) oriented in given directions (24, 26, 110, 112)relative to the flow direction of the gas stream (11) in the nozzle (10), and controlled means for the adjustable closure of these injection slits (23, 84), these controlled closure means comprising flaps (56, 90) mounted inside the said housings (18, 80) and displaceably guided along the said slits (23, 84), these flaps (56, 90) being connected to actuating means situated outside the housings (18, 80) and the nozzle (10).

2. The exhaust nozzle (10) according to Claim 1, wherein the flaps (56, 90) are displaceable between a closure position of the injection slits (23, 84) and two extreme positions for the opening of slits (23, 84) oriented in a given direction (24, 110) and for the closure of slits (23, 84) oriented in another direction (26, 112), and vice versa.

3. The exhaust nozzle (10) according to Claim 1, wherein the actuating means are connected to a common control means, e.g. a jack (74, 104).

4. The exhaust nozzle (10) according to Claim 1, wherein the flaps (56) are mounted rotationally inside the housings (18) and each comprises an axial rotary-drive shaft (64), which extends outside the housing (18).

5. The exhaust nozzle (10) according to Claim 4, wherein the end of the shaft (64) external ta the housing (18) supports a pinion (70), which is engaged with a rack (72) extending along the housings (18) outside the nozzle (10).

6. The exhaust nozzle (10) according to Claim 4, wherein seals (61) are mounted between the rotational flaps (56) and the side walls (22) of the housings (18) containing the injection slits (23).

7. The exhaust nozzle (10) according to Claim 1, wherein the flaps (90) are mounted slidingly inside the housings (80), the flap(s) (90) of each housing (80) being connected to a shaft (96) extending outside the housing (80) and the nozzle (10) and fixed to a crossbar (102) extending along the housings (80) outside the nozzle (10).

8. The exhaust nozzle (10) according to claim 1, wherein the structural housings (18, 80) are situated at the exit throat of the nozzle (10).

9. The exhaust nozzle (10) according to claim 1, wherein it comprises at least one housing (18, 80) extending in the middle of the nozzle (10) and two lateral housings (20, 82) arranged at the ends of a cross section of the nozzle (10).

10. The exhaust nozzle (10) according to claim 1, wherein it comprises two lateral housings (20, 82) arranged at the ends of a cross section of the nozzle (10) and two central housings (18, 80) situated at an equal distance apart and equidistant from the lateral housings (20, 82).

11. The exhaust nozzle (10) according to claim 1, wherein the housings (18, 20, 80, 82) are fed with pressurized gas by the drawing-off of gas from the engine of the flying craft.

12. The exhaust nozzle (10) according to claim 1, wherein the housings 18,80) have a profiled shape in cross section and the pressurized gas injection slits (23, 84) are formed in a middle portion of this profiled shape and extend over a majority of the height of the housings (18, 80).

13. The exhaust nozzle (10) according to claim 1, wherein the housings (18, 20, 80, 82) contain inner straightening vanes (42) for the gas stream, extending between their supply end (40) and the injection slits (23).
